# EUROPÄISCHE PATENTSCHRIFT

(11) **EP 2 591 989 B1**
(45) Veröffentlichungstag und Bekanntmachung des Hinweises auf die Patenterteilung: **11.06.2014**
(21) Anmeldenummer: 11008903.4
(22) Anmeldetag: 09.11.2011
(51) Int. Cl.: B62D 51/04, B60K 7/00

(54) **Fahrbares Arbeittsgerät**
Moveable work device
Appareil de travail mobile

(43) Veröffentlichungstag der Anmeldung: 15.05.2013
(73) Patentinhaber: Viking GmbH, 6336 Langkampfen-Kufstein (AT)
(72) Erfinder: Gottinger, Clemens, 6320 Angerberg (AT); Schulze Schencking, Dirk, 52062 Aachen (DE); Sgro, Sebastian, 52078 Aachen (DE)
(74) Vertreter: Reinhardt, Annette

(56) Entgegenhaltungen:
- EP-A1- 1 859 669
- CA-A1- 2 388 290
- DE-U1-202005 018 429
- US-A- 5 651 241
- US-A1- 2002 153 179

## Beschreibung

Die Erfindung betrifft ein fahrbares Arbeitsgerät der im Oberbegriff des Anspruchs 1 angegebenen Gattung.

Aus der gattungsgemäßen DE 20 2005 018 429 U1 ist ein Rasentraktor bekannt, der ein hydrostatisches Getriebe besitzt. Der Rasentraktor besitzt Steuerventile mit einer Stellung für die Vorwärtsfahrt und einer Stellung für die Rückwärtsfahrt. Zwischen diesen beiden Stellungen ist eine Bremsstellung vorgesehen.

Aus der CA 2 388 290 A1 ist ein Rasentraktor bekannt, der einen Antriebsmodus besitzt. Der Antriebsmodus kann auch als dynamischer Bremsmodus wirken, um bei Bergabfahrt die Geschwindigkeit des Rasentraktors zu begrenzen.

Der Erfindung liegt die Aufgabe zugrunde, ein fahrbares Arbeitsgerät der gattungsgemäßen Art zu schaffen, bei dem auf einfache Weise eine Begrenzung der Geschwindigkeit bei Fahrten in allen möglichen Geländeformen, sowohl in ebenem Gelände als auch bei Bergauf- und Bergabfahrt, erreicht wird.

Diese Aufgabe wird durch ein fahrbares Arbeitsgerät mit den Merkmalen des Anspruchs 1 gelöst.

Es hat sich gezeigt, dass bei Bergabfahrt das Lastmoment an den angetriebenen Rädern in antreibender Richtung wirkt und den hydrostatischen Motor zu beschleunigen versucht. Dadurch fällt der Druck auf der Druckseite ab. Es ist nun vorgesehen, diesen Druckabfall zur Ansteuerung eines Bremsventils zu nutzen. Bei absinkendem Druck auf der Druckseite wird der Druck auf der abfließenden Seite des hydrostatischen Motors durch das Bremsventil selbsttätig erhöht. Aufgrund der Druckerhöhung auf der abfließenden Seite wird der hydrostatische Motor abgebremst. Dadurch kann auf einfache Weise eine selbsttätige Bremsfunktion des Arbeitsgeräts erreicht werden. Ein aktives Bremsen oder eine andere Bedienung wie das Einschalten eines Bremsmodus oder dgl. durch den Bediener ist nicht erforderlich. Auch bei Bergauffahrt kann aufgrund der beschriebenen Wirkung des Bremsventils durch zusätzliches Anschieben des Arbeitsgeräts durch den Bediener keine zusätzliche Beschleunigung erreicht werden.

Vorteilhaft wird das Bremsventil in Richtung auf die geschlossene Stellung belastet, also in diese Richtung gedrückt oder gezogen. Das Bremsventil wird insbesondere von mindestens einem elastischen Element, insbesondere mindestens einer Feder in Richtung auf die geschlossene Stellung belastet. Das Bremsventil kann jedoch auch von Hydraulikmedium mit entsprechendem Druck in Richtung auf die geschlossene Stellung beaufschlagt sein. In Richtung auf die geöffnete Stellung ist das Bremsventil insbesondere mit dem Hydraulikmedium der Druckseite beaufschlagt. Bei sinkendem Druck auf der Druckseite wird das Bremsventil von der Feder automatisch geschlossen, und zwar proportional zum Druckabfall auf der Druckseite. Durch das Schließen des Bremsventils steigt der Druck auf der Druckseite wieder an, und das Bremsventil wird wieder weiter geöffnet, wenn der hydrostatische Motor abgebremst wurde. Dadurch kann auch bei Bergabfahrt des Arbeitsgeräts eine konstante, insbesondere die vom Bediener eingestellte Geschwindigkeit beibehalten werden. Ein einfacher Aufbau ergibt sich, wenn das Bremsventil ein Schieberventil ist. Das Schieberventil kann beispielsweise ein lineares Schieberventil oder ein Drehschieberventil sein.

Vorteilhaft besitzt das Arbeitsgerät ein erstes Bedienelement zum Wählen der Fahrgeschwindigkeit des Arbeitsgeräts und ein zweites Bedienelement zum Einkuppeln des Fahrantriebs. Das zweite Bedienelement ist insbesondere ein Kupplungsbügel. Die Gestaltung des zweiten Bedienelements als Kupplungsbügel ist besonders vorteilhaft, wenn das Arbeitsgerät ein Rasenmäher ist. Das zweite Bedienelement kann beispielsweise auch als Gaspedal ausgebildet sein, insbesondere, wenn das Arbeitsgerät ein Aufsitzmäher ist. Auch andere Gestaltungen des zweiten Bedienelements können vorteilhaft sein. Das zweite Bedienelement ist vorteilhaft in Richtung auf die unbetätigte Stellung gefedert. Dadurch ist sichergestellt, dass das Arbeitsgerät nur bei betätigtem zweitem Bedienelement, insbesondere betätigtem Kupplungsbügel oder Gashebel bzw. Gaspedal, fahren kann. Vorteilhaft ist über das zweite Bedienelement das Schluckvolumen der Pumpe veränderbar. Über das erste Bedienelement ist insbesondere das maximale Schluckvolumen der Pumpe festlegbar. Das Schluckvolumen ist bei konstanter Drehzahl des Antriebsmotors proportional zur Antriebsdrehzahl des Rads des Arbeitsgeräts. Dadurch, dass über das erste Bedienelement die maximale Geschwindigkeit über das maximale Schluckvolumen einstellbar ist, bleibt eine einmal eingestellte Geschwindigkeit auch beim Loslassen des zweiten Bedienelements erhalten. Beim Loslassen des zweiten Bedienelements wird die Geschwindigkeit allmählich entsprechend dem Zurückstellen der Schwenkwiege verringert. Dadurch, dass das zweite Bedienelement das Schluckvolumen der Pumpe verändert, ist ein langsames Anfahren durch allmähliches Betätigen des zweiten Bedienelements einfach möglich. Wenn das zweite Bedienelement vollständig betätigt ist, ist die über das erste Bedienelement eingestellte maximale Geschwindigkeit erreicht. Auch gegenüber der eingestellten maximalen Geschwindigkeit verringerte Geschwindigkeiten können durch nur teilweises Betätigen des zweiten Bedienelements einfach eingestellt werden.

Vorteilhaft ist die Pumpe eine Axialkolbenpumpe in Schrägscheibenbauweise. Zur Veränderung des Schluckvolumens wird vorteilhaft die Lage der Schwenkwiege der Pumpe verändert. Dadurch ist auf einfache Weise eine Veränderung des Schluckvolumens möglich. Die Festlegung des maximalen Schluckvolumens kann über einen Anschlag für die Schwenkwiege erfolgen. Ein einfacher Aufbau wird jedoch erreicht, wenn das zweite Bedienelement die Schwenkwiege über ein Betätigungselement betätigt, das einen Totweg aufweist. Beim Betätigen des ersten Bedienelements wird der Totweg auch verändert. Wird das erste Bedienelement aus seiner unbetätigten Stellung in Richtung auf die vollständig betätigte Stellung betätigt, wenn das zweite Bedienelement nicht betätigt ist, also in seiner Null-Stellung steht, so verringert sich der Totweg. Dadurch wird unabhängig von der mit dem ersten Bedienelement eingestellten Fahrgeschwindigkeit diese Fahrgeschwindigkeit immer bei vollständig betätigtem zweiten Bedienelement erreicht. Dadurch, dass das erste Bedienelement auf den Totweg des Betätigungselements wirkt, wird nur ein einziges Betätigungselement, beispielsweise ein Bowdenzug, benötigt, auf den sowohl das erste als auch das zweite Bedienelement wirken. Dadurch wird der Aufbau des Arbeitsgeräts vereinfacht.

Eine einfache Ausbildung ergibt sich, wenn das Betätigungselement eine Zugfeder aufweist, die bis zu einer begrenzten Länge gezogen werden kann. Sobald die Feder auf die begrenzte Länge gezogen wurde, wird ein weiterer Stellweg des zweiten Bedienelements auf die Schwenkwiege übertragen. Das erste Bedienelement spannt die Feder ebenfalls und verringert so den Totweg. Der Totweg ist vorteilhaft so bemessen, dass er dem maximalen Betätigungsweg des zweiten Bedienelements entspricht. Bei unbetätigtem ersten Bedienelement erfolgt dadurch beim Betätigen des zweiten Bedienelements kein Einkuppeln, also keine Veränderung der Lage der Schwenkwiege. Der gesamte Stellweg des zweiten Bedienelements wird als Totweg zurückgelegt. Bei vollständig betätigtem ersten Bedienelement ist kein Totweg mehr gegeben, so dass eine Betätigung des zweiten Bedienelements unmittelbar eine Veränderung der Lage der Schwenkwiege und damit einen Fahrantrieb zur Folge hat. Eine teilweise Betätigung des ersten Bedienelements führt entsprechend zunächst zum Zurücklegen eines Totwegs beim Betätigen des zweiten Bedienelements und anschließend zum Verstellen der Schwenkwiege, bis der maximale Betätigungsweg des zweiten Bedienelements zurückgelegt ist. Die Verringerung des Totwegs durch das erste Bedienelement legt damit die maximale Auslenkung der Schwenkwiege der Pumpe und damit das maximale Schluckvolumen fest.

Damit das Arbeitsgerät bei ausgeschaltetem Fahrantrieb mit möglichst geringem Widerstand geschoben werden kann, ist ein Bypassventil vorgesehen, das in geöffneter Stellung die Druckseite des mindestens einen hydrostatischen Motors mit der abfließenden Seite verbindet. Das Bypassventil stellt damit einen Bypass zu dem hydrostatischen Motor dar. Beim Schieben arbeitet der hydrostatische Motor als Pumpe. Das Bypassventil arbeitet vorteilhaft selbsttätig. Hierzu ist insbesondere vorgesehen, dass das Bypassventil in Richtung auf die geöffnete Stellung belastet, insbesondere gefedert ist und in Richtung auf die geschlossene Stellung mit dem Hydraulikmedium der Druckseite beaufschlagt ist. Bei nicht eingeschaltetem Fahrantrieb ist die Schwenkwiege der Pumpe nicht ausgelenkt, und der Motor, der beim Schieben als Pumpe wirkt, pumpt das Hydraulikmedium drucklos um. Der Druck auf der Druckseite entspricht in etwa dem Druck auf der Ansaugseite der Pumpe und auf der abfließenden Seite der Motoren. Aufgrund eines Druckabfalls an Ventilen oder dgl., kann es zu einem geringen Druckunterschied zwischen Druckseite und Ansaugseite der Pumpe bzw. auch zwischen der Druckseite und der abfließenden Seite der Motoren kommen, der beispielsweise etwa 1 bis 2 bar betragen kann. Da der Federkraft der Feder des Bypassventils bei ausgeschaltetem Fahrantrieb kein erhöhter Druck entgegenwirkt, wird das Bypassventil geöffnet. Da der Druck an der Druckseite dem Druck an der abfließenden Seite des Motors entspricht, ist das Bremsventil geschlossen. Dadurch wird das Hydraulikmedium aufgrund der bewegten Räder von dem hydrostatischen Motor drucklos umgepumpt. Dadurch wird ein geringer Widerstand gegen das manuelle Schieben des Arbeitsgeräts sichergestellt. Das Bypassventil ist vorteilhaft als Schieberventil, insbesondere als lineares Schieberventil oder als Drehschieberventil, ausgebildet. Dadurch ergibt sich ein einfacher Aufbau. Das Bypassventil kann jedoch auch als Sitzventil ausgeführt sein.

Der hydrostatische Motor ist insbesondere ein Axialkolbenmotor in Schrägscheibenbauweise mit konstantem Schluckvolumen. Das hydrostatische Getriebe umfasst vorteilhaft zwei hydrostatische Motoren, die voneinander getrennte Abtriebswellen antreiben. Eine erste Abtriebswelle treibt dabei mindestens ein bezogen auf die Fahrtrichtung des Arbeitsgeräts bei Vorwärtsfahrt rechts angeordnetes Rad an, und eine zweite Abtriebswelle treibt mindestens ein bezogen auf die Fahrtrichtung des Arbeitsgeräts bei Vorwärtsfahrt links angeordnetes Rad an. Die beiden hydrostatischen Motoren bilden ein hydraulisches Differenzial, da beiden Hydraulikmedium von einer gemeinsamen Pumpe zugeführt wird. Bei Geradeausfahrt werden beide Motoren mit dem gleichen Volumenstrom durchströmt. Bei Kurvenfahrt ändern sich die Momentenverhältnisse an den an gegenüberliegenden Seiten des Arbeitsgeräts angeordneten Rädern. Am kurveninneren Rad erhöht sich der Widerstand. Dadurch verringert sich der Volumenstrom durch den das kurveninnere Rad antreibenden Motor. Da der Pumpenvolumenstrom gleich bleibt, erhöht sich der Volumenstrom durch den Motor, der das an der Kurvenaußenseite angeordnete Rad antreibt, in entsprechendem Maße.

Vorteilhaft sind beide hydrostatischen Motoren identisch aufgebaut. Dadurch ergibt sich ein einfacher Aufbau.

Das hydrostatische Getriebe ist insbesondere ein Kompaktgetriebe. Vorteilhaft besitzt das hydrostatische Getriebe ein Getriebegehäuse, in dem beide hydrostatische Motoren und die Pumpe angeordnet sind und das als Raum für Hydraulikmedium dient. Dadurch wird ein kompakter Aufbau erreicht. Eine vorteilhafte Anordnung im Arbeitsgerät ergibt sich, wenn die Abtriebswellen der hydrostatischen Motoren koaxial zueinander angeordnet sind. Insbesondere ist die Drehachse der Pumpenwelle senkrecht zur Drehachse der Abtriebswellen angeordnet. Die Drehachse der Pumpenwelle liegt insbesondere parallel zur Drehachse der Antriebswelle des Antriebsmotors. Dadurch kann ein zusätzliches Winkelgetriebe, das die Übersetzung von der üblicherweise senkrecht angeordneten Antriebswelle des Antriebsmotors zur üblicherweise horizontal angeordneten Radachse bewirkt, entfallen. Auch eine nicht senkrechte Anordnung der Drehachse der Pumpenwelle zur Drehachse der Antriebswelle des Antriebsmotors, also eine Anordnung der Drehachsen in beliebigen Winkeln zueinander oder eine parallele Anordnung der Drehachsen, kann jedoch vorteilhaft sein.

Das hydrostatische Getriebe ist vorteilhaft ein Untersetzungsgetriebe, bei dem die Abtriebsdrehzahl geringer als die Antriebsdrehzahl ist. Als besonders vorteilhaft hat sich ein maximales Übersetzungsverhältnis von 1:1,5 bis 1:5, insbesondere von 1:2,5 bis 1:4, herausgestellt. Das maximale Übersetzungsverhältnis ist dabei das Übersetzungsverhältnis bei maximal ausgelenkter Schwenkwiege. Der Arbeitsbereich des hydrostatischen Getriebes erstreckt sich jeweils von einer Übersetzung von 0, die sich bei nicht ausgelenkter Schwenkwiege ergibt, bis zu dem angegebenen maximalen Übersetzungsverhältnis, das sich bei vollständig ausgelenkter Schwenkwiege ergibt. Das maximale Übersetzungsverhältnis des hydrostatischen Getriebes kann auf einfache Weise durch entsprechende Wahl der Schluckvolumina von Pumpe und hydrostatischen Motoren zueinander verwirklicht werden. Als besonders vorteilhaft hat sich herausgestellt, wenn das Schluckvolumen der beiden hydrostatischen Motoren zusammen etwa das 3,2fache des Schluckvolumens der Pumpe beträgt, so dass sich ein Übersetzungsverhältnis der Schluckvolumina von 1:3,2 ergibt. Der Antriebsmotor arbeitet üblicherweise in einem Drehzahlbereich von etwa 2500 bis 3500 Umdrehungen pro Minute. Die Abtriebsdrehzahl am Hydrogetriebe beträgt vorteilhaft maximal etwa 950 Umdrehungen pro Minute. Es kann jedoch auch vorteilhaft sein, für das hydrostatische Getriebe ein anderes Übersetzungsverhältnis zu wählen, so dass vorgeschaltete und/oder nachgeschaltete Getriebe zur Veränderung der Drehzahl, beispielsweise an den Rädern des Arbeitsgeräts, entfallen können. Dadurch ergibt sich ein einfacher Aufbau des Arbeitsgeräts.

Ein Ausführungsbeispiel der Erfindung wird im Folgenden anhand der Zeichnung erläutert. Es zeigen:
- Fig. 1: eine schematische, perspektivische Darstellung eines Rasenmähers,
- Fig. 2: eine schematische Draufsicht auf den Rasenmäher aus Fig. 1,
- Fig. 3: eine schematische Seitenansicht des Fahrantriebs des Rasenmähers aus Fig. 1,
- Fig. 4: einen Schnitt durch das hydrostatische Getriebe entlang der Linie IV-IV in Fig. 3 bei unbetätigtem Kupplungshebel,
- Fig. 5: einen Schnitt entsprechend Fig. 4 bei betätigtem Kupplungshebel,
- Fig. 6: einen Schnitt durch die hydrostatischen Motoren entlang der Linie VI-VI in Fig. 5,
- Fig. 7 bis Fig. 9: schematische Darstellungen der Betätigung der Schwenkwiege der Pumpe über den Kupplungshebel und den Geschwindigkeitswählhebel,
- Fig. 10 bis Fig. 12: Schaltbilder des hydrostatischen Getriebes in unterschiedlichen Betriebszuständen,
- Fig. 13: eine Seitenansicht der Ventileinheit des hydrostatischen Getriebes,
- Fig. 14: einen Schnitt entlang der Linie XIV-XIV in Fig. 13 und
- Fig. 15: einen Schnitt entlang der Linie XV-XV in Fig. 13.

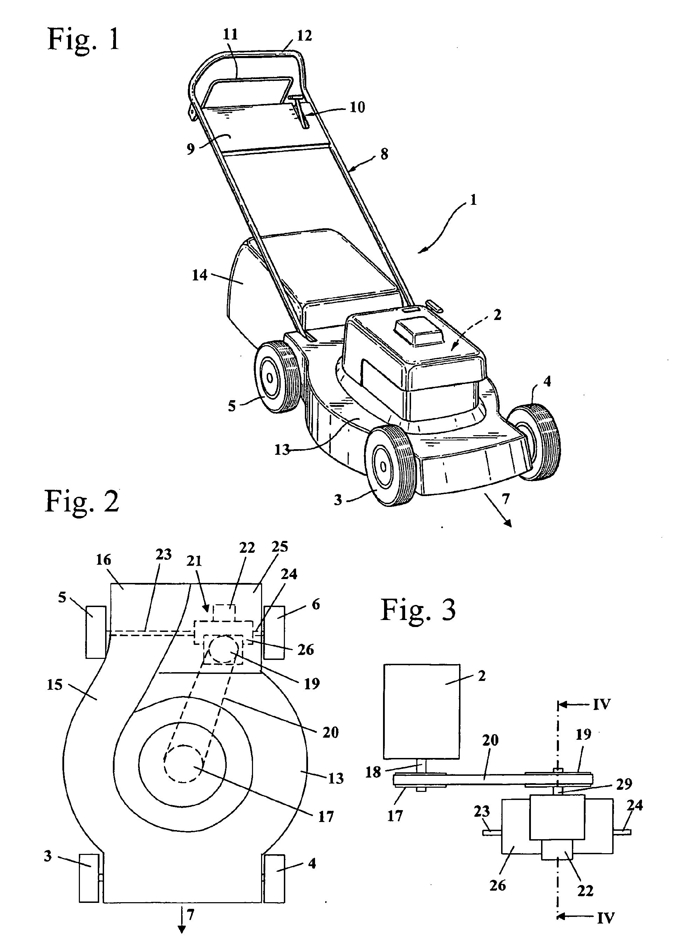

Fig. 1 zeigt als Ausführungsbeispiel für ein fahrbares Arbeitsgerät einen Rasenmäher 1, der ein Gehäuse 13 besitzt, das sich über vier Räder 3, 4, 5, 6 (Fig. 2) auf dem Boden abstützt. Das fahrbare Arbeitsgerät kann auch ein anderes Arbeitsgerät wie beispielsweise ein Aufsitzmäher, ein Vertikutierer oder dgl. sein. Im Ausführungsbeispiel sind die Hinterräder 5 und 6 angetrieben. Es könnten jedoch auch die Vorderräder 3 und 4 angetrieben sein. Auch ein Antrieb aller vier Räder 3, 4, 5, 6 kann vorteilhaft sein. Am Gehäuse 13 ist ein Antriebsmotor 2 angeordnet, der unter beispielsweise einer separaten Abdeckung angeordnet oder auf das Gehäuse 13 aufgesetzt sein kann. Im Betrieb bewegt sich der Rasenmäher 1 bei Vorwärtsfahrt in einer Fahrtrichtung 7 fort. An dem bezogen auf die Fahrtrichtung 7 hinten liegenden Bereich des Gehäuses 13 ist ein Griffbügel 8 festgelegt, der etwa U-förmig ausgebildet ist und an dessen hinterem Ende ein Griffabschnitt 12 ausgebildet ist, an dem der Bediener den Griffbügel 8 greifen und den Rasenmäher 1 führen kann. Benachbart zum Griffbügel 8 ist ein Kupplungsbügel 11 schwenkbar gelagert. Zum Zuschalten des Fahrantriebs des Rasenmähers 1 muss der Kupplungsbügel 11 vom Bediener betätigt werden. Benachbart zum Griffabschnitt 12 sind die beiden Arme des Griffbügels 8 über eine Griffplatte 9 verbunden, an der der Kupplungsbügel 11 gelagert sein kann. An der Griffplatte 9 ist ein Geschwindigkeitswählhebel 10 angeordnet, mit dem der Bediener die Fahrgeschwindigkeit des Rasenmähers 1 einstellen kann. Auch andere Anordnungen und Ausbildungen der Bedienelemente zum Einkuppeln und zum Einstellen der Fahrgeschwindigkeit sind möglich. An der in Fahrtrichtung 7 hinten liegenden Seite des Gehäuses 13 ist im Ausführungsbeispiel ein Grasfangkorb 14 angeordnet.

Wie Fig. 2 zeigt, ist im Gehäuse 13 ein Auswurfkanal 15 ausgebildet, der über eine Auswurföffnung 16 in den Grasfangkorb 14 (Fig. 1) mündet.

Wie die Figuren 2 und 3 schematisch zeigen, besitzt der Antriebsmotor 2 eine rotierend angetriebene Antriebswelle 18, an der eine Antriebsscheibe 17 drehfest fixiert ist. Der Antriebsmotor 2 kann ein Verbrennungsmotor oder ein Elektromotor sein. Die Drehzahl der Antriebswelle 18 beträgt vorteilhaft von 2500 bis 3500 Umdrehungen pro Minute. Die Antriebsscheibe 17 treibt über einen Antriebsriemen 20 eine Abtriebsscheibe 19 an, die drehfest auf einer Pumpenwelle 29 fixiert ist. Es kann auch eine andere Wirkverbindung von Antriebsmotor 2 und Pumpenwelle 29 vorgesehen sein, beispielsweise über eine Kardanwelle, einen Kettenantrieb, einen Zahnriementrieb oder dgl. Die Pumpenwelle 29 ist im Ausführungsbeispiel die Eingangswelle eines hydrostatischen Getriebes 21. Anstatt der Pumpenwelle 29 kann auch eine Zwischenwelle vorgesehen sein, die über eine vorgelagerte Untersetzungsstufe mit der Eingangswelle des hydrostatischen Getriebes verbunden ist. Das hydrostatische Getriebe 21 ist, wie Fig. 2 zeigt, im Bereich der Hinterräder 5 und 6 in einem separaten Getrieberaum 25 angeordnet. Auch eine andere Anordnung des hydrostatischen Getriebes 21 kann vorteilhaft sein. Das hydrostatische Getriebe 21 besitzt ein Getriebegehäuse 26, an dem eine Ventileinheit 22 fixiert, insbesondere angeschraubt ist. Auch eine andere Anordnung der Ventileinheit 22, beispielsweise am Gehäuse 13 des Rasenmähers 1, und eine Verbindung mit dem Getriebegehäuse 26 über Schläuche oder dgl. kann vorteilhaft sein. Aus dem Getriebegehäuse 26 ragen an gegenüberliegenden Seiten Abtriebswellen 23 und 24. Die erste Abtriebswelle 23 treibt das rechte Hinterrad 5 an und die zweite Abtriebswelle 24 das linke Hinterrad 6. Die Abtriebswellen 23 und 24 besitzen vorteilhaft eine maximale Drehzahl von 950 Umdrehungen pro Minute.

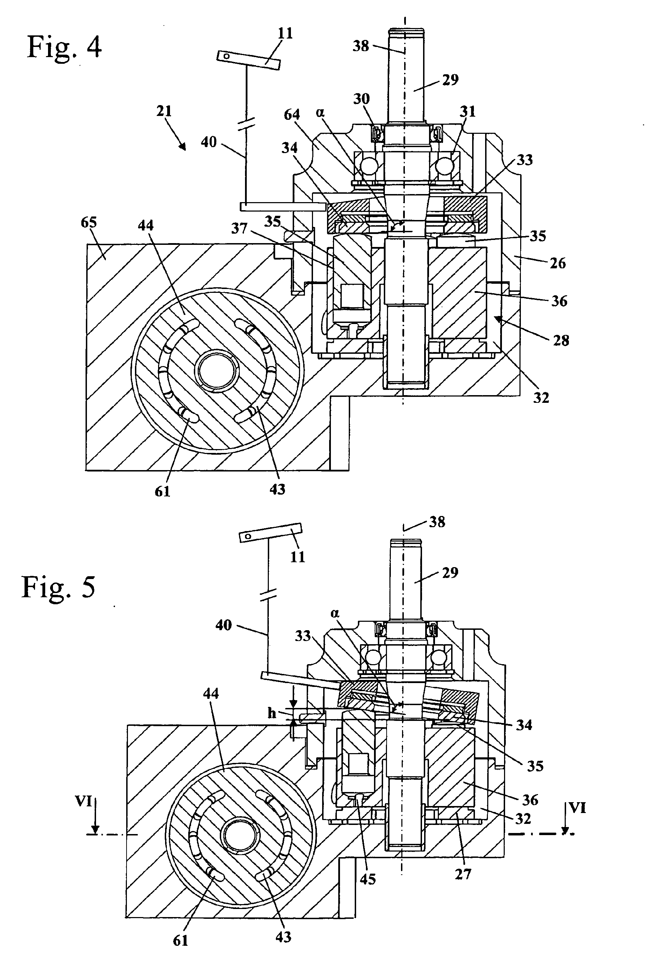

Wie Fig. 4 zeigt, umfasst das hydrostatische Getriebe 21 eine im Getriebegehäuse 26 angeordnete Pumpe 28, die über die Pumpenwelle 29 angetrieben ist. Die Pumpenwelle 29 ist mit einem Wälzlager 31, das im Ausführungsbeispiel als Kugellager ausgebildet ist, drehbar in einem ersten Gehäuseteil 64 des Getriebegehäuses 26 gelagert. Anstatt des Wälzlagers 31 kann auch ein anderes Lager vorgesehen sein. Das Innere des Getriebegehäuses 26 bildet einen Ölraum 32, der als Vorratsbehälter für das von dem hydrostatischen Getriebe 21 als Hydraulikmedium benutzte Hydrauliköl dient. Zur Abdichtung nach außen ist an der Pumpenwelle 29 eine Dichtung 30 angeordnet.

Die Pumpe 28 ist als Axialkolbenpumpe ausgebildet. Mit der Pumpenwelle 29 ist ein Kolbenträger 36 drehfest verbunden, in dem mehrere, im Ausführungsbeispiel sieben Kolben 35 in Aufnahmen 37 des Kolbenträgers 36 beweglich gelagert sind. Die Kolben 35 sind als Kugelkopfkolben ausgebildet. Die Köpfe der Kolben 35 liegen an einer Druckplatte 34 an, die an einer Schwenkwiege 33 der Pumpe 28 festgelegt ist. Bei der in Fig. 4 gezeigten Stellung ist die Schwenkwiege 33 nicht ausgelenkt. Die Anlagefläche der Druckplatte 34 für die Kolben 35 schließt mit der Drehachse 38 der Pumpenwelle 29 einen Winkel α von 90° ein. Die Schwenkwiege 33 ist im Getriebegehäuse 26 drehfest aber gegenüber der Pumpenwelle 29 schwenkbar gelagert. Die Verschwenkung der Schwenkwiege 33 erfolgt über den in Fig. 4 schematisch gezeigten Kupplungsbügel 11, der die Schwenkwiege 33 über ein Betätigungselement, im Ausführungsbeispiel einen Bowdenzug 40, betätigt.

Wie Fig. 4 zeigt, ist das Getriebegehäuse 26 senkrecht zur Drehachse 38 der Pumpenwelle 29 geteilt. Der Bereich des Getriebegehäuses 26, in dem die Pumpe 28 angeordnet ist, wird von dem ersten Gehäuseteil 64 und von einem zweiten Gehäuseteil 65 verschlossen. Wie Fig. 4 auch zeigt, ist im zweiten Gehäuseteil 65 eine Scheibe 44 angeordnet, in der ein Abschnitt einer Druckleitung 43 und ein Abschnitt einer Rückleitung 61 ausgebildet sind und die die Verbindung der Kolben 35 mit den Leitungen 43, 61 steuert. In die Druckleitung 43 fördert die Pumpe 28 Hydrauliköl aus dem Ölraum 32. Die Druckleitung 43 führt das unter Druck stehende Hydrauliköl den Motoren 41, 42 des hydrostatischen Getriebes 21 zu. Die Rückleitung 61 leitet das von den Motoren abfließende Öl zurück in den Ölraum 32.

Bei der in Fig. 4 gezeigten unbetätigten Stellung des Kupplungsbügels 11 ist die Schwenkwiege 33 nicht ausgelenkt. Dadurch führen die Kolben 35 bei Rotation um die Pumpenwelle 29 keinen Hub aus. Die Pumpe 28 fördert damit kein Hydrauliköl.

Fig. 5 zeigt die betätigte Stellung des Kupplungsbügels 11. In dieser Stellung ist die Schwenkwiege 33 ausgelenkt, so dass die Anlagefläche an der Druckplatte 34 mit der Drehachse 38 der Pumpenwelle 29 einen Winkel α von weniger als 90° einschließt. Bei einer Umdrehung der Pumpenwelle 29 führen die Kolben 35 dadurch einen Hub h aus. Beim Aufwärtshub der Kolben 35, also wenn sich die Kolben 35 aus dem Kolbenträger 36 hinaus bewegen, wird Hydrauliköl über Kanäle 45 im Kolbenträger 36 aus dem Ölraum 32 angesaugt. Beim Abwärtshub der Kolben 35 wird das Hydrauliköl in die Druckleitung 43 gedrückt. Fig. 5 zeigt die Schwenkwiege 33 bei maximaler Auslenkung. Benachbart zu den Kanälen 45 ist eine Platte 27 angeordnet.

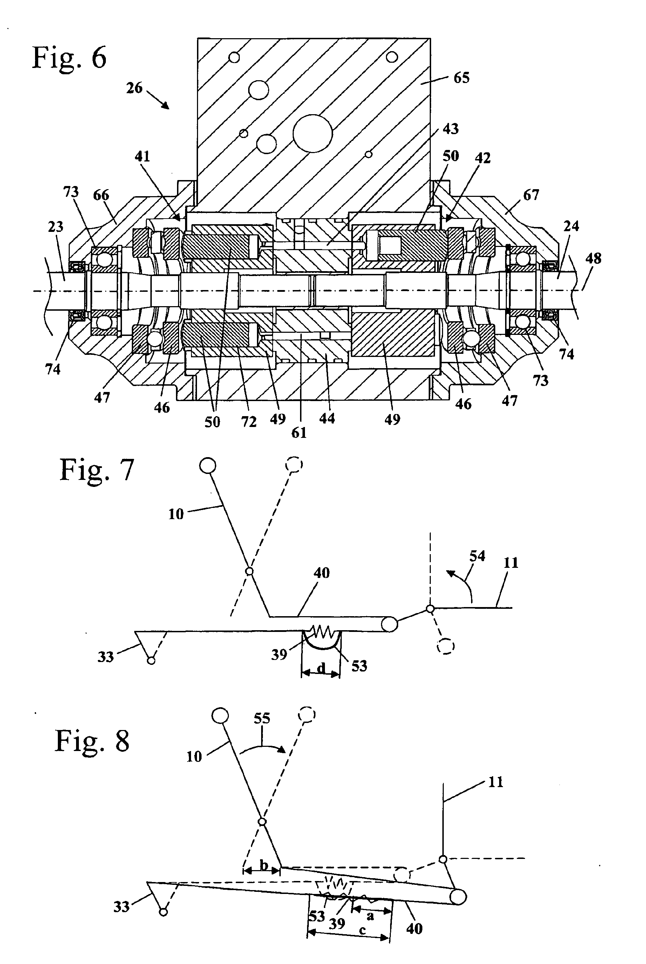

Fig. 6 zeigt den Aufbau der hydrostatischen Motoren 41 und 42 des hydrostatischen Getriebes 21 im Einzelnen. Im Ausführungsbeispiel sind zwei hydrostatische Motoren 41 und 42 vorgesehen, die baugleich ausgebildet sind. Beiden Motoren 41 und 42 wird über die zwischen den beiden Motoren angeordnete Scheibe 44 über die Druckleitung 43 unter Druck stehendes Hydrauliköl zugeführt. Die hydrostatischen Motoren 41 und 42 sind spiegelsymmetrisch zur Scheibe 44 angeordnet, wobei die Position der Kolben 50 der hydrostatischen Motoren 41 und 42 zueinander versetzt sein kann, um Druckstöße zu minimieren. Der erste hydrostatische Motor 41 besitzt einen Kolbenträger 49, der drehfest mit der ersten Abtriebswelle 23 verbunden ist. Auch der hydrostatische Motor 41 besitzt sieben Kolben 50, die als Kugelkopfkolben ausgebildet sind und die in Aufnahmen 72 parallel zur Drehachse 48 der Abtriebswellen 23 und 24 beweglich sind. Die Köpfe der Kolben 50 liegen an einer Druckplatte 46 an, die den innenliegenden Ring eines Wälzlagers 47, nämlich eines Axialkugellagers bildet. Auch ein anderes Lager kann vorteilhaft sein. Der Neigungswinkel der Druckplatte 46 gegenüber der Drehachse 48 ist konstruktiv fest vorgegeben und nicht einstellbar, so dass auch der Hub der Kolben 50 und damit das Schluckvolumen des Motors 41 konstant ist. Das in das Getriebegehäuse 26 ragende Ende der Abtriebswelle 23 ist in der Scheibe 44 gelagert. Ein weiteres Radiallager, nämlich ein Wälzlager 73, das ebenfalls als Kugellager ausgebildet ist, ist an der dem Kolbenträger 49 abgewandten Seite des Wälzlagers 47 angeordnet. Auch eine andere Gestaltung der Lager kann vorteilhaft sein. Benachbart zum Wälzlager 73 ist eine Dichtung 74 angeordnet, die das Gehäuse 26 zur Umgebung hin abdichtet. Die Wälzlager 73 und 47 werden vom Hydrauliköl geschmiert. Der zweite hydrostatische Motor 42 ist identisch ausgebildet. Der Kolbenträger 49 des zweiten Motors 42 ist drehfest mit der zweiten Abtriebswelle 24 verbunden. Der zweite Motor 42 treibt die zweite Abtriebswelle 24 rotierend an. Wie Fig. 6 zeigt, sind die Kolbenträger 49 der beiden Motoren 41 und 42 weitgehend im zweiten Gehäuseteil 65 angeordnet, das an seinen beiden Stirnseiten, an denen die Abtriebswellen 23 und 24 nach außen treten, durch weitere Gehäuseteile 66 und 67 verschlossen ist.

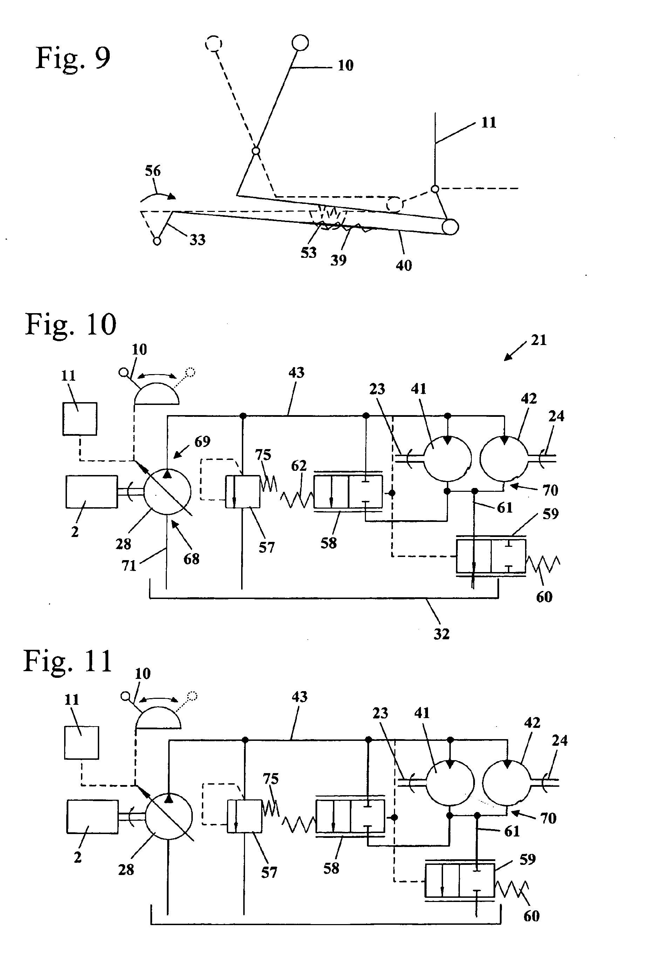

Die Figuren 7 bis 9 zeigen die Ansteuerung des hydrostatischen Getriebes 21. Es kann jedoch auch eine andere Ansteuerung vorteilhaft sein. Der Geschwindigkeitswählhebel 10 betätigt die Schwenkwiege 33 über den Bowdenzug 40. Am Bowdenzug 40 greift auch der Kupplungsbügel 11 an. Der Bowdenzug 40 besitzt einen Totweg, der dadurch gebildet ist, dass im Betätigungsweg eine Zugfeder 39 angeordnet ist. Die Zugfeder 39 kann auch an anderer Stelle angreifen, beispielsweise an der Schwenkwiege 33 oder am Geschwindigkeitshebel 10. Anstatt der Zugfeder 39 kann auch ein anderes elastisches Element vorgesehen sein. Die Zugfeder 39 ist von einer Längenbegrenzung 53 überbrückt, die bei der in Fig. 7 gezeigten unbetätigten Stellung von Geschwindigkeitswählhebel 10 und Kupplungsbügel 11 nicht gespannt ist. Auch die Zugfeder 39 ist nicht gespannt. Es kann jedoch auch eine geringe Vorspannung der Zugfeder 39 vorteilhaft sein. Wird der Kupplungsbügel 11 in Richtung des Pfeils 54 in die in Fig. 8 gezeigte, vollständig betätigte Stellung gedrückt, so wird der Bowdenzug 40 gelängt. Dabei wird die Feder 39 auseinander gezogen, bis die Längenbegrenzung 53 vollständig gespannt ist. Dabei wird ein Totweg a überwunden, der sich als Längendifferenz der maximalen Länge c der Längenbegrenzung 53 zur unbetätigten Länge d der Zugfeder 39 ergibt. Der Totweg a entspricht vorteilhaft dem Betätigungsweg b des Geschwindigkeitswählhebels 10 von der unbetätigten in die vollständig betätigte Stellung. Wird der Kupplungsbügel 11 vollständig verschwenkt, so wird bei nicht betätigtem Geschwindigkeitswählhebel 10 die Schwenkwiege 33 nicht ausgelenkt. Wurde der Geschwindigkeitswählhebel 10 in Richtung des Pfeils 55 in die vollständig betätigte Stellung verstellt, also die maximale Geschwindigkeit eingestellt, wie in Fig. 9 gezeigt, so bewirkt ein Verschwenken des Kupplungsbügels 11 unmittelbar eine Verschwenkung der Schwenkwiege 33, wie durch den Pfeil 56 in Fig. 9 angedeutet ist. Die maximale Geschwindigkeit ist erreicht, wenn der Kupplungsbügel 11 in der in Fig. 9 gezeigten vollständig betätigten Stellung steht. In dieser Stellung ist die Schwenkwiege 33 maximal ausgelenkt.

Wird der Geschwindigkeitswählhebel 10 auf eine Zwischenstellung zwischen den in den Figuren 7 und 9 gezeigten Stellungen verstellt, so wird der Totweg a durch den Geschwindigkeitswählhebel 10 nur teilweise überwunden. Beim Betätigen des Kupplungsbügels 11 muss dann zunächst der restliche Totweg a überwunden werden. Dadurch steht nicht mehr der volle Betätigungsweg b zum Verschwenken der Schwenkwiege 33 zur Verfügung, so dass die Schwenkwiege 33 bei vollständig betätigter Stellung des Kupplungsbügels 11 nicht vollständig, sondern nur teilweise ausgelenkt ist. Dadurch, dass der Kupplungsbügel 11 auf die Schwenkwiege 33 wirkt, ist ein langsames Anfahren durch langsames Betätigen des Kupplungsbügels 11 auf einfache Weise möglich.

Fig. 10 zeigt schematisch die Beschaltung des hydrostatischen Getriebes 21. Die Pumpe 28, die vom Antriebsmotor 2 angetrieben und vom Geschwindigkeitswählhebel 10 und vom Kupplungsbügel 11 angesteuert ist, fördert Hydrauliköl über eine Ansaugleitung 71 in die Druckleitung 43. Dabei wird das Hydrauliköl von einer Ansaugseite 68 auf eine Druckseite 69 gefördert. Die Ansaugleitung 71 wird im Ausführungsbeispiel durch die den Ölraum 32 mit dem Kolbeninneren verbindenden Kanäle gebildet, von denen in Fig. 5 nur der Kanal 45, nicht jedoch die in der Platte 27 ausgebildeten Kanäle gezeigt sind. Die Druckleitung 43 ist über ein Überdruckventil 57 mit dem Ölraum 32 verbunden. Das Überdruckventil 57, das als Sitzventil ausgebildet ist, ist von einer Feder 75 in Richtung auf die geschlossene Stellung belastet und öffnet, wenn der Druck auf der Druckseite 69 einen vorgegebenen Wert überschreitet. Die Druckleitung 43 mündet an beiden Motoren 41 und 42. Die Motoren 41 und 42 sind von einem Bypassventil 58 überbrückt, das die Druckleitung 43 mit der Rückleitung 61 verbindet. Die Rückleitung 61 ist an der abfließenden Seite 70 der Motoren 41 und 42 angeordnet. In der Rückleitung 61 ist ein Bremsventil 59 angeordnet. Das Bypassventil 58 und das Bremsventil 59 sind als Schieberventile ausgebildet. Das Bypassventil 58 kann jedoch auch als Sitzventil ausgebildet sein. Das Bypassventil 58 ist von einer Feder 62, die im Ausführungsbeispiel als Druckfeder ausgebildet ist, in Richtung auf seine geöffnete Stellung beaufschlagt. In Richtung auf die geschlossene Stellung des Bypassventils 58 wirkt der Druck aus der Druckleitung 43. Das Bremsventil 59 ist über eine Feder 60, die ebenfalls als Druckfeder ausgebildet ist, in Richtung auf seine geschlossene Stellung federbeaufschlagt. In Richtung auf die geöffnete Stellung wirkt der Druck aus der Druckleitung 43. Das Bremsventil 59 kann jedoch auch in Richtung auf seine geschlossene Stellung mit Hydraulikmedium mit geeignetem Druck beaufschlagt sein.

Das Bremsventil 59 bewirkt ein automatisches Abbremsen des Rasenmähers 1 beispielsweise bei Bergabfahrt. Fig. 11 zeigt das Bremsventil 59 in gesperrter Stellung. Bei Bergabfahrt des Rasenmähers beschleunigt das Moment an den Rädern 5 und 6, das nun in antreibender Richtung wirkt, die Motoren 41 und 42. Dadurch fällt der Druck vor den Motoren 41 und 42, also in der Druckleitung 43, kontinuierlich ab. Dieser abfallende Druck führt dazu, dass das Bremsventil 59 kontinuierlich schließt. Der ansteigende Druck an der abfließenden Seite 70 der Motoren 41 und 42 bremst die Motoren 41 und 42 ab. Durch das Abbremsen steigt der Druck in der Druckleitung 43 erneut an, so dass das Bremsventil 59 wieder weiter geöffnet wird. Dadurch wird der Rasenmäher 1 bei Fahrt in unebenem Gelände, beispielsweise bei Bergabfahrt geregelt abgebremst. Die Regelung erfolgt selbsttätig und automatisch, ohne dass der Bediener eingreifen muss. Dadurch kann jede vom Bediener über den Geschwindigkeitswählhebel 10 eingestellte Geschwindigkeit auch bei Bergabfahrt erhalten werden. Eine entsprechende Geschwindigkeitsregelung ergibt sich, wenn der Bediener bei Bergauffahrt den Rasenmäher 1 zusätzlich anschiebt. Auch hier wird die Geschwindigkeit automatisch so geregelt, dass sich die über den Geschwindigkeitswählhebel 10 eingestellte Geschwindigkeit ergibt. Wird der Fahrantrieb ausgeschaltet, der Kupplungsbügel 11 also nicht betätigt, kann der Rasenmäher 1 frei rollen, da der Motor das Hydrauliköl drucklos umpumpt, wie im Folgenden noch näher beschrieben wird.

Das Bypassventil 58 dient dazu, das Schieben des Rasenmähers 1 von Hand zu erleichtern. Bei ausgeschaltetem Fahrantrieb ist der Kupplungsbügel 11 nicht betätigt, die Schwenkwiege 33 also nicht ausgelenkt. Dadurch fördert die Pumpe 28 kein Hydrauliköl. Der Druck in der Druckleitung 43 ist niedrig, so dass das Bypassventil 58 aufgrund der Kraft der Feder 62 selbsttätig öffnet. Gleichzeitig wird das Bremsventil 59 aufgrund der Kraft der Feder 60 geschlossen. Beim Schieben des Rasenmähers 1 werden die Kolben 50 der Motoren 41 und 42 über die Räder 5 und 6 rotierend angetrieben. Über das Bypassventil 58 können die Motoren 41 und 42 das Öl drucklos umpumpen, so dass der Rasenmäher 1 leicht von Hand geschoben werden kann. Auch die Betätigung des Bypassventils 58 erfolgt automatisch in Abhängigkeit des Drucks in der Druckleitung 43, so dass der Bediener hierzu keine speziellen Bedienschritte vornehmen muss. Dadurch wird eine einfache Bedienung erreicht.

Die Motoren 41 und 42 sind beide mit der Druckleitung 43 beaufschlagt. Da an beiden Motoren 41 und 42 auf der Druckseite der gleiche Druck herrscht, ist das Fördervolumen, also die Antriebsgeschwindigkeit der Räder 5 und 6, vom Widerstand an den Rädern 5, 6 abhängig. Bei größerem Widerstand sinkt die Fördermenge und damit die Drehzahl, während sich Fördermenge und Drehzahl am anderen Rad 5, 6 in gleichem Maße erhöhen. Die Motoren 41 und 42 bilden so ein hydraulisches Differenzial.

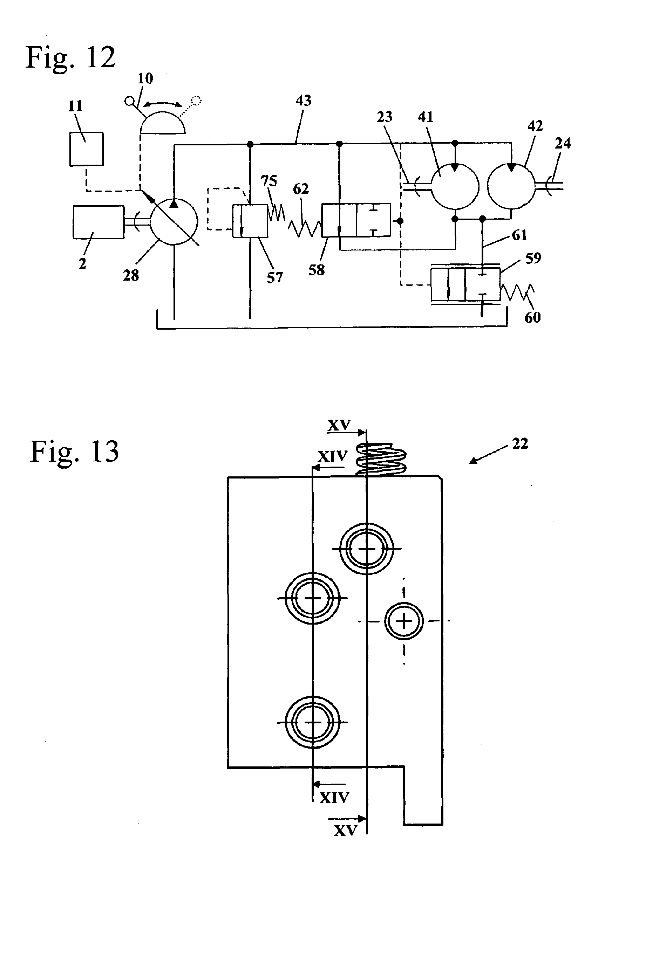

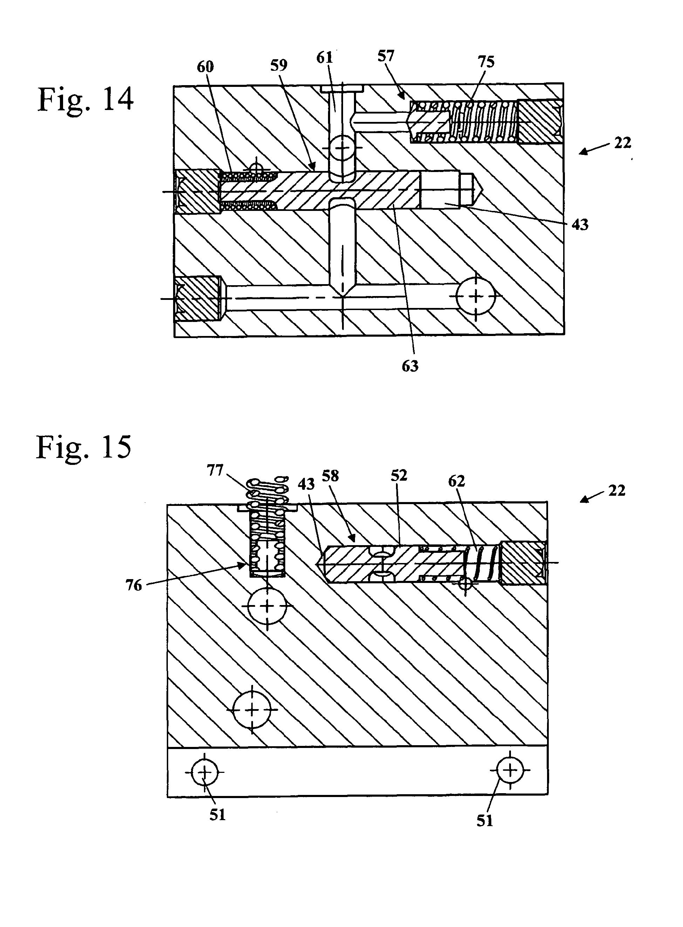

Die Figuren 13 bis 15 zeigen den Aufbau der Ventileinheit 22. Fig. 14 zeigt den Aufbau des Bremsventils 59, das als Schieberventil ausgeführt ist. Bei der in Fig. 14 gezeigten vollständig geöffneten Stellung ist die Feder 60 gespannt. Der Druck in der Druckleitung 43 ist demnach so hoch, dass die Druckfeder 60 zusammengedrückt wird. Bei sinkendem Druck in der Druckleitung 43 bewegt sich der Schieber 63 von der Druckfeder 60 weg zur Seite der Druckleitung 43 und verschließt dabei kontinuierlich die Rückleitung 61.

In Fig. 14 ist auch der konstruktive Aufbau eines Überdruckventils 57 gezeigt. Das Überdruckventil 57 ist vorteilhaft von einer in Fig. 14 nicht gezeigten Feder in Richtung auf die in Fig. 14 gezeigte geschlossene Stellung beaufschlagt.

Fig. 15 zeigt die Gestaltung des Bypassventils 58, das ebenfalls als Schieberventil ausgebildet ist. Die Druckfeder 62 ist bei der in Fig. 15 gezeigten geöffneten Stellung des Bypassventils 58 entspannt. Der Schieber 52 des Bypassventils 58 ist in der Stellung angeordnet, in der das Bypassventil 58 maximal geöffnet ist. Dies ist gegeben, wenn kein Druck in der Druckleitung 43 herrscht, der Kupplungsbügel 11 also nicht betätigt ist. Wird der Kupplungsbügel 11 betätigt, so steigt der Druck in der Druckleitung 43, und der Schieber 52 bewegt sich zur Feder 62 und drückt diese zusammen. Dabei wird das Bypassventil 58 geschlossen. In Fig. 15 ist auch ein weiteres Überdruckventil 76 gezeigt, das von einer Feder 77 beaufschlagt ist.

Die Ventileinheit 22 ist als separate Baugruppe ausgeführt und besitzt Bohrungen 51, mit denen die Ventileinheit 22 am Getriebegehäuse 26 angeschraubt werden kann. Durch die Anordnung der Ventile in einer separaten Baugruppe ergibt sich ein einfacher Aufbau.

Das hydrostatische Getriebe ist vorteilhaft ein Untersetzungsgetriebe. Eine Untersetzung kann auf einfache Weise dadurch erreicht werden, dass das Schluckvolumen der beiden Motoren zusammen größer als das Schluckvolumen der Pumpe 28 ist. Vorteilhaft beträgt das maximale Übersetzungsverhältnis, also die Abtriebsdrehzahl der Motoren 41 und 42 zur Antriebsdrehzahl der Pumpe 28 bei maximal ausgelenkter Schwenkwiege 33, 1:5 bis 1:1,5, insbesondere 1:4 bis 1:2,5. Als besonders vorteilhaft hat sich ein Verhältnis von etwa 1:3,2 herausgestellt. Durch entsprechende Betätigung von Geschwindigkeitswählhebel 10 und Kupplungsbügel 11 kann der Bediener im Betrieb Drehzahlen der Abtriebswellen 23 und 24 von 0 bis 950 Umdrehungen pro Minute einstellen und dadurch die Fahrgeschwindigkeit im gewünschten Bereich anpassen.

Das Bremsventil 59 und die Ansteuerung des Getriebes 21 über zwei Bedienelemente, wobei über das erste Bedienelement die Fahrgeschwindigkeit wählbar ist und über das zweite Bedienelement der Fahrantrieb einkuppelbar ist, wobei das erste Bedienelement das maximale Schluckvolumen der Pumpe festlegt und das zweite Bedienelement das Schluckvolumen der Pumpe verändert, stellen eigenständige, voneinander unabhängige erfinderische Gedanken dar. Die Art der Ansteuerung des Getriebes 21 kann auch bei einem Getriebe 21 ohne Bremsventil 59 vorteilhaft sein.

## Patentansprüche

1. Fahrbares Arbeitsgerät mit einem Antriebsmotor (2), der über ein hydrostatisches Getriebe (21) mindestens ein Rad (5, 6) des Arbeitsgeräts antreibt, wobei das hydrostatische Getriebe (21) mindestens eine vom Antriebsmotor (2) angetriebene Pumpe (28), die ein Hydraulikmedium von einer Ansaugseite (68) zu einer Druckseite (69) fördert, und mindestens einen mit dem Hydraulikmedium der Druckseite (69) beaufschlagten hydrostatischen Motor (41, 42) umfasst,
**dadurch gekennzeichnet, dass** mindestens ein Bremsventil (59) an der abfließenden Seite (70) des hydrostatischen Motors (41, 42) angeordnet ist, das bei sinkendem Druck auf der Druckseite (69) den Druck an der abfließenden Seite (70) des hydrostatischen Motors (41, 42) selbsttätig erhöht.

2. Arbeitsgerät nach Anspruch 1,
**dadurch gekennzeichnet, dass** das Bremsventil (59) in Richtung auf die geschlossene Stellung belastet wird und in Richtung auf die geöffnete Stellung mit dem Hydraulikmedium der Druckseite (69) beaufschlagt ist.

3. Arbeitsgerät nach Anspruch 2,
**dadurch gekennzeichnet, dass** das Bremsventil (59) von mindestens einem elastischen Element, insbesondere von mindestens einer Feder (60) in Richtung auf die geschlossene Stellung belastet wird.

4. Arbeitsgerät nach Anspruch 2 oder 3,
**dadurch gekennzeichnet, dass** das Bremsventil (59) von Hydraulikmedium in Richtung auf die geschlossene Stellung belastet wird.

5. Arbeitsgerät nach einem der Ansprüche 1 bis 4,
**dadurch gekennzeichnet, dass** das Bremsventil (59) ein Schieberventil ist.

6. Arbeitsgerät nach einem der Ansprüche 1 bis 5,
**dadurch gekennzeichnet, dass** das Arbeitsgerät ein erstes Bedienelement zum Wählen der Fahrgeschwindigkeit des Arbeitsgeräts und ein zweites Bedienelement zum Einkuppeln des Fahrantriebs besitzt, wobei über das erste Bedienelement das maximale Schluckvolumen der Pumpe (28) festlegbar ist und über das zweite Bedienelement das Schluckvolumen veränderbar ist.

7. Arbeitsgerät nach Anspruch 6,
**dadurch gekennzeichnet, dass** die Pumpe (28) eine Axialkolbenpumpe in Schrägscheibenbauweise ist, und dass zur Veränderung des Schluckvolumens die Lage der Schwenkwiege (33) der Pumpe (28) verändert wird.

8. Arbeitsgerät nach Anspruch 6 oder 7,
**dadurch gekennzeichnet, dass** das zweite Bedienelement die Schwenkwiege (33) über ein Betätigungselement betätigt, das einen Totweg (a) aufweist, und dass beim Betätigen des ersten Bedienelements der Totweg (a) verändert wird.

9. Arbeitsgerät nach einem der Ansprüche 1 bis 8,
**dadurch gekennzeichnet, dass** ein Bypassventil (58) vorgesehen ist, das in geöffneter Stellung die Druckseite (69) des hydrostatischen Motors (41, 42) mit der abfließenden Seite (70) verbindet.

10. Arbeitsgerät nach Anspruch 9,
**dadurch gekennzeichnet, dass** das Bypassventil (58) in Richtung auf die geöffnete Stellung belastet ist und in Richtung auf die geschlossene Stellung mit dem Hydraulikmedium der Druckseite (69) beaufschlagt ist.

11. Arbeitsgerät nach Anspruch 9 oder 10,
**dadurch gekennzeichnet, dass** das Bypassventil (58) als Schieberventil ausgebildet ist.

12. Arbeitsgerät nach Anspruch 9 oder 10,
**dadurch gekennzeichnet, dass** das Bypassventil als Sitzventil ausgebildet ist.

13. Arbeitsgerät nach einem der Ansprüche 1 bis 12,
**dadurch gekennzeichnet, dass** der hydrostatische Motor (41, 42) ein Axialkolbenmotor in Schrägscheibenbauweise mit konstantem Schluckvolumen ist.

14. Arbeitsgerät nach einem der Ansprüche 1 bis 13,
**dadurch gekennzeichnet, dass** das hydrostatische Getriebe (21) zwei hydrostatische Motoren (41, 42) aufweist, die zwei voneinander getrennte Abtriebswellen (23, 24) antreiben, wobei die erste Abtriebswelle (23) mindestens ein bezogen auf die Fahrtrichtung (7) des Arbeitsgeräts bei Vorwärtsfahrt rechts angeordnetes Rad (5) antreibt und wobei die zweite Abtriebswelle (24) mindestens ein bezogen auf die Fahrtrichtung (7) des Arbeitsgeräts bei Vorwärtsfahrt links angeordnetes Rad (6) antreibt.

15. Arbeitsgerät nach Anspruch 14,
**dadurch gekennzeichnet, dass** beide hydrostatische Motoren (41, 42) identisch aufgebaut sind.

16. Arbeitsgerät nach Anspruch 14 oder 15,
**dadurch gekennzeichnet, dass** das hydrostatische Getriebe (21) ein Getriebegehäuse (26) besitzt, in dem beide hydrostatische Motoren (41, 42) und die Pumpe (28) angeordnet sind und das als Raum für Hydraulikmedium dient, wobei die Abtriebswellen (23, 24) der hydrostatischen Motoren (41, 42) insbesondere koaxial zueinander angeordnet sind und wobei die Drehachse (38) der Pumpenwelle (29) insbesondere senkrecht zur Drehachse (48) der Abtriebswellen (23, 24) angeordnet ist.

## Claims

1. Mobile working implement, comprising a drive motor (2) which drives at least one wheel (5, 6) of the working implement via a hydrostatic transmission (21), the hydrostatic transmission (21) comprising at least one pump (28), which is driven by the drive motor (2) and delivers a hydraulic medium from a suction side (68) to a discharge side (69), and at least one hydrostatic motor (41, 42), to which the hydraulic medium of the discharge side (69) is applied,
**characterised in that** at least one brake valve (59) is located on the outflow side (70) of the hydrostatic motor (41, 42), which brake valve (59) automatically increases the pressure on the outflow side (70) of the hydrostatic motor (41, 42) if the pressure on the discharge side (69) is reduced.

2. Working implement according to claim 1,
**characterised in that** the brake valve (59) is loaded towards the closed position and pressurised by the hydraulic medium of the discharge side (69) towards the open position.

3. Working implement according to claim 2,
**characterised in that** the brake valve (59) is loaded towards the closed position by at least one elastic element, in particular by at least one spring (60).

4. Working implement according to claim 2 or 3,
**characterised in that** the brake valve (59) is loaded towards the closed position by the hydraulic medium.

5. Working implement according to any of claims 1 to 4,
**characterised in that** the brake valve (59) is a spool valve.

6. Working implement according to any of claims 1 to 5,
**characterised in that** the working implement has a first control for selecting the travelling speed of the working implement and a second control for engaging the travelling drive, wherein the maximum displacement of the pump (28) can be determined via the first control and the displacement can be altered via the second control.

7. Working implement according to claim 6,
**characterised in that** the pump (28) is an axial piston pump of a swashplate design, and **in that** the position of the swashplate cradle (33) of the pump (28) is altered for altering the displacement.

8. Working implement according to claim 6 or 7,
**characterised in that** the second control actuates the swashplate cradle (33) via an actuating element having a dead distance (a), and **in that** the dead distance (a) is altered by operating the first control.

9. Working implement according to any of claims 1 to 8,
**characterised in that** a bypass valve (58) is provided, which connects the discharge side (69) of the hydrostatic motor (41, 42) to the outflow side (70) in the open position.

10. Working implement according to claim 9,
**characterised in that** the bypass valve (58) is loaded towards the open position and pressurised by the hydraulic medium of the discharge side (69) towards the closed position.

11. Working implement according to claim 9 or 10,
**characterised in that** the bypass valve (58) is designed as a spool valve.

12. Working implement according to claim 9 or 10,
**characterised in that** the bypass valve (58) is designed as a seated valve.

13. Working implement according to any of claims 1 to 12,
**characterised in that** the hydrostatic motor (41, 42) is an axial piston motor of a swashplate design with a constant displacement.

14. Working implement according to any of claims 1 to 13,
**characterised in that** the hydrostatic transmission (21) comprises two hydrostatic motors (41, 42) which drive two separate drive shafts (23, 24), the first drive shaft (23) driving at least one wheel (5) located on the right-hand side in respect to the direction of travel (7) of the working implement in forward travel, and the second drive shaft (24) driving at least one wheel (6) located on the left-hand side in respect to the direction of travel (7) of the working implement in forward travel.

15. Working implement according to claim 14,
**characterised in that** the two hydrostatic motors (41, 42) are identically constructed.

16. Working implement according to claim 14 or 15,
**characterised in that** the hydrostatic transmission (21) has a transmission housing (26) in which the two hydrostatic motors (41, 42) and the pump (28) are located and which serves as a space for hydraulic medium, wherein the drive shafts (23, 24) of the hydrostatic motors (41, 42) are in particular arranged to be coaxial with one another and wherein the axis of rotation (38) of the pump shaft (29) is in particular arranged perpendicular to the axis of rotation (48) of the drive shafts (23, 24).

## Revendications

1. Appareil de travail mobile avec un moteur d'entraînement (2) qui entraîne par l'intermédiaire d'une transmission hydrostatique (21) au moins une roue (5, 6) de l'appareil, étant précisé que la transmission hydrostatique (21) comprend au moins une pompe (28), entraînée par le moteur d'entraînement (2), qui amène un agent hydraulique d'un côté aspiration (68) jusqu'à un côté pression (69), et au moins un moteur hydrostatique (41, 42) qui est soumis à l'action de l'agent hydraulique du côté pression (69),
**caractérisé en ce qu'**il est prévu sur le côté écoulement (70) du moteur hydrostatique (41, 42) au moins une soupape de freinage (59) qui, lors d'une baisse de pression sur le côté pression (69), augmente automatiquement la pression sur le côté écoulement (70) du moteur hydrostatique (41, 42).

2. Appareil de travail mobile selon la revendication 1,
**caractérisé en ce que** la soupape de freinage (59) est contrainte en direction de la position fermée, et est soumise à l'action de l'agent hydraulique du côté pression (69) en direction de la position ouverte.

3. Appareil de travail mobile selon la revendication 2,
**caractérisé en ce que** la soupape de freinage (59) est contrainte par au moins un élément élastique, en particulier par au moins un ressort (60), en direction de la position fermée.

4. Appareil de travail mobile selon la revendication 2 ou 3,
**caractérisé en ce que** la soupape de freinage (59) est contrainte par l'agent hydraulique en direction de la position fermée.

5. Appareil de travail mobile selon l'une des revendications 1 à 4,
**caractérisé en ce que** la soupape de freinage (59) est une soupape à tiroir.

6. Appareil de travail mobile selon l'une des revendications 1 à 5,
**caractérisé en ce qu'**il comporte un premier élément de commande pour choisir sa vitesse de marche, et un second élément de commande pour accoupler l'entraînement de marche, étant précisé que le premier élément de commande permet de fixer le volume d'absorption maximal de la pompe (28) et que le second élément de commande permet de modifier le volume d'absorption.

7. Appareil de travail mobile selon la revendication 6,
**caractérisé en ce que** la pompe (28) est une pompe à piston axial du type à plateau incliné, et **en ce que** pour modifier le volume d'absorption, la position de la bascule pivotante (33) de la pompe (28) est modifiée.

8. Appareil de travail mobile selon la revendication 6 ou 7,
**caractérisé en ce que** le second élément de commande actionne par l'intermédiaire de la bascule pivotante (33) un élément d'actionnement qui présente une course morte (a), et **en ce que** lors de l'actionnement du premier élément de commande, la course morte (a) est modifiée.

9. Appareil de travail mobile selon l'une des revendications 1 à 8,
**caractérisé en ce qu'**il est prévu une soupape de dérivation (58) qui, en position ouverte, relie le côté pression (69) du moteur hydrostatique (41, 42) au côté d'écoulement (70).

10. Appareil de travail mobile selon la revendication 9,
**caractérisé en ce que** la soupape de dérivation (58) est contrainte en direction de la position ouverte, et est soumise à l'action de l'agent hydraulique du côté pression (69) en direction de la position fermée.

11. Appareil de travail mobile selon la revendication 9 ou 10,
**caractérisé en ce que** la soupape de dérivation (58) est conçue comme une soupape à tiroir.

12. Appareil de travail mobile selon l'une des revendications 9 ou 10,
**caractérisé en ce que** la soupape de dérivation est conçue comme une soupape à siège.

13. Appareil de travail mobile selon l'une des revendications 1 à 12,
**caractérisé en ce que** le moteur hydrostatique (41, 42) est un moteur à piston axial du type à plateau incliné, avec un volume d'absorption constant.

14. Appareil de travail mobile selon l'une des revendications 1 à 13,
**caractérisé en ce que** la transmission hydrostatique (21) comporte deux moteurs hydrostatiques (41, 42) qui entraînent deux arbres de sortie (23, 24) séparés l'un de l'autre, étant précisé que le premier arbre de sortie (23) entraîne au moins une roue (5) qui est disposée à droite par rapport au sens de marche (7) de l'appareil en marche avant, et que le second arbre de sortie (24) entraîne au moins une roue (6) qui est disposée à gauche par rapport au sens de marche (7) de l'appareil en marche avant.

15. Appareil de travail mobile selon la revendication 14,
**caractérisé en ce que** les deux moteurs hydrostatiques (41, 42) ont des constructions identiques.

16. Appareil de travail mobile selon la revendication 14 ou 15,
**caractérisé en ce que** la transmission hydrostatique (21) comporte un carter de transmission (26) dans lequel sont disposés les deux moteurs hydrostatiques (41, 42) et la pompe (28), et qui sert d'espace pour l'agent hydraulique, étant précisé que les arbres de sortie (23, 24) des moteurs hydrostatiques (41, 42) sont disposés en particulier coaxialement l'un par rapport à l'autre, et que l'axe de rotation (38) de l'arbre de pompe (29) est disposé en particulier perpendiculairement à l'axe de rotation (48) des arbres de sortie (23, 24).
